# EUROPÄISCHE PATENTSCHRIFT

(11) **EP 1 524 143 B1**
(45) Veröffentlichungstag und Bekanntmachung des Hinweises auf die Patenterteilung: **17.12.2008**
(21) Anmeldenummer: 04024741.3
(22) Anmeldetag: 18.10.2004
(51) Int. Cl.: B60J 7/22

(54) **Windabweiser für ein Fahrzeugdach**
Wind deflector for a vehicle roof
Déflecteur de vent pour toit d'un véhicule

(30) Priorität: 17.10.2003 DE 10349002
(43) Veröffentlichungstag der Anmeldung: 20.04.2005
(73) Patentinhaber: Webasto AG, 82131 Stockdorf (DE)
(72) Erfinder: Karami, Jadi, 85521 Ottobrunn (DE); Kiedl, Martin, 80638 München (DE); Gallner, Christian, 83607 Holzkirchen (DE)
(74) Vertreter: Wiese, Gerhard

(56) Entgegenhaltungen:
- DE-C1- 4 409 484
- DE-C1- 19 603 670
- US-A- 4 482 183
- US-A- 4 630 859
- US-A- 4 986 598

## Beschreibung

Die Erfindung betrifft einen Windabweiser für ein Fahrzeugdach gemäß dem Oberbegriff des Patentanspruchs 1.

Eine derartiger Windabweiser ist aus der DE 35 32 104 A1 bekannt. Bei diesem ist die Schwenkachse des Windabweisers im Bereich des Dachrahmens an einem Lagerbock gelagert, der durch Schrauben mit dem Dachrahmen verbunden ist. Dabei muss die Befestigungsstelle am Dachrahmen zur Aufnahme der Verschraubung vorab exakt festgelegt und entsprechend vorbereitet sein. Ein weiterer Windabweiser ist aus der DE 44 11 386 C1 bekannt. Bei diesem ist die Schwenkachse selbst als Scharnier ausgebildet, dessen unteres Befestigungsteil an einem vertikalen Steg des Dachrahmens durch eine Rastverbindung gehalten wird. In beiden Fällen sind die Befestigungsstellen der Windabweiser-Lagerung festgelegt und können beispielsweise bei einer modularen Verwendung eines Dachrahmens für verschiedene Fahrzeugdächer mit verschiedenen Windabweisern nicht ohne weiteres angepasst werden. Zusätzlich bedürfen die typischerweise für die Ausstellung des Windabweisers verwendeten Federn einer zusätzlichen Befestigung am Dachrahmen. Noch ein weiterer Windabweiser ist aus der gattungsgemäßen DE 4409484 C1 bekannt.

Aufgabe der Erfindung ist es, einen Windabweiser für ein Fahrzeugdach zu schaffen, dessen Lagerung in einfacher Weise an unterschiedlichen Einbauorten befestigbar und dort leicht justierbar ist.

Diese Aufgabe wird durch einen Windabweiser mit den Merkmalen des Anspruchs 1 gelöst. Vorteilhafte Ausgestaltungen der Erfindung sind in den Unteransprüchen angegeben. Die Erfindung betrifft auch ein Fahrzeugdach mit einem solchen Windabweiser.

Dadurch, dass die Lagerung des Windabweisers eine Klemmverbindung zur kraftschlüssigen Abstützung an zwei gegenüberliegenden Wänden des Dachrahmens oder der Führungsschiene aufweist, ist eine flexible Befestigung und eine genaue Einstellbarkeit möglich.

Vorteilhaft weist die Klemmverbindung wenigstens eine einen horizontalen Steg des Dachrahmens oder der Führungsschiene untergreifende Anlagefläche und ein die Anlagefläche gegen den horizontalen Steg anpressendes Befestigungsorgan auf.

Gemäß einer weiteren vorteilhaften Ausgestaltung weist die Lagerung des Windabweisers zu beiden Seiten jeweils eine einen horizontalen Steg des Dachrahmens oder der Führungsschiene untergreifende Anlagefläche auf. Hierdurch wird eine symmetrische Krafteinleitung ermöglicht und ein Verkanten bei einer Verschiebung der Lagerung vermieden.

Gemäß einer weiteren vorteilhaften Ausgestaltung ist vorgesehen, dass das Befestigungsorgan als Abdrückschraube ausgebildet ist. Gemäß einer besonders vorteilhaften Ausgestaltung fixiert das Befestigungsorgan gleichzeitig eine zur Betätigung des Windabweisers benötigte Feder am Dachrahmen bzw. an der Führungsschiene.

Nachfolgend wird ein Ausführungsbeispiel des erfindungsgemäßen Fahrzeugdaches unter Bezugnahme auf die Zeichnungen näher erläutert. Es zeigt:
- Fig. 1: eine schematische perspektivische Teilansicht eines Fahrzeugdachs mit geöffnetem Deckel und ausgestelltem Windabweiser,
- Fig. 2: eine vergrößerte perspektivische Detaildarstellung einer Lagerung des Windabweisers,
- Fig. 3: einen Längsschnitt gemäß der Linie A-A in Fig. 4,
- Fig. 4: eine Draufsicht auf die Lagerung gemäß Fig. 2,
- Fig. 5A: einen Querschnitt im Bereich der Linie B-B gemäß Fig. 4,
- Fig. 5 B: einen Querschnitt im Bereich der Linie C-C gem. Fig. 4, und
- Fig. 6: eine schematische perspektivische Teilansicht einer WindabweiserLagerung mit montierter Feder.

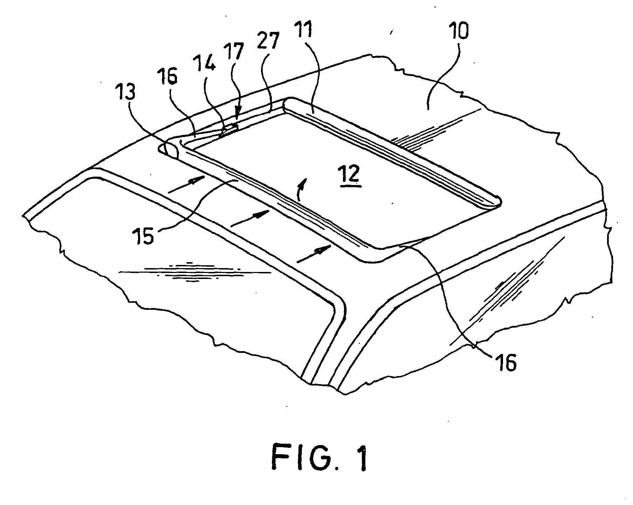

Das in Fig. 1 dargestellte Fahrzeugdach 10 weist eine Dachöffnung 12 auf, die mittels eines verschiebbaren Deckels 11 wahlweise verschließbar oder - wie in der Fig. 1 dargestellt - freigebbar ist. Bei nach hinten verschobenem Deckel 11 wird im Bereich einer Vorderkante 13 der Dachöffnung 12 ein Windabweiser 15 nach oben geschwenkt, um Zugluft und Windgeräusche vom Fahrzeuginnenraum fernzuhalten. Der Windabweiser 15 ist beiderseits der Dachöffnung 12 durch Ausstellarme 16 gehalten, die an einer Schwenkachse 14 in einer Lagerung 17 gelagert sind. Die Lagerung 17 wird von einem Lagerbock 18 gebildet, der an einer seitlich der Dachöffnung 12 angeordneten Führungsschiene 27 oder einem die Dachöffnung umgebenden Dachrahmen 28 durch eine Klemmverbindung kraftschlüssig befestigt ist.

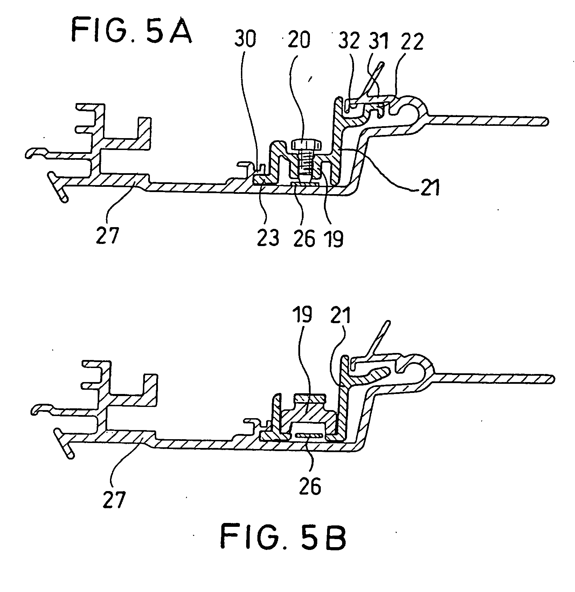

Im gezeigten Ausführungsbeispiel wirkt die Klemmverbindung derart, dass der Lagerbock 18 zum einen mit einem unteren horizontalen Steg 23 auf der der Dachöffnung 12 zugewandten Innenseite einen horizontalen Steg 30 der Führungsschienen 27 untergreift, und zum anderen mit einem oberen horizontalen Steg 22 einen nahe der Außenseite der Führungsschienen 27 nach innen vorspringenden horizontalen Steg 31 untergreift. Dies ist am besten in Fig. 5A zu erkennen. Durch zwei in einem Mittelteil 19 des Lagerbocks 18 angeordnete als Abdrückschrauben wirkende Schrauben 20 wird der Lagerbock 18 gegenüber der Führungsschiene 27 nach oben gedrückt, wobei sich Anlageflächen an der Oberseite der horizontalen Stege 22 und 23 des Lagerbocks 18 an entsprechende Anlageflächen an der Unterseite der horizontalen Stege 30 und 31 der Führungsschienen 27 anpressen. Von den Anlageflächen ist nur die obere in Fig. 5A mit 32 exemplarisch bezeichnet. Der Lagerbock 18 lässt sich dadurch nach Einschieben in die Führungsschienen 27 in Längsrichtung an beliebiger Stelle positionieren und befestigen und auch nachträglich für eine Justierung leicht verstellen.

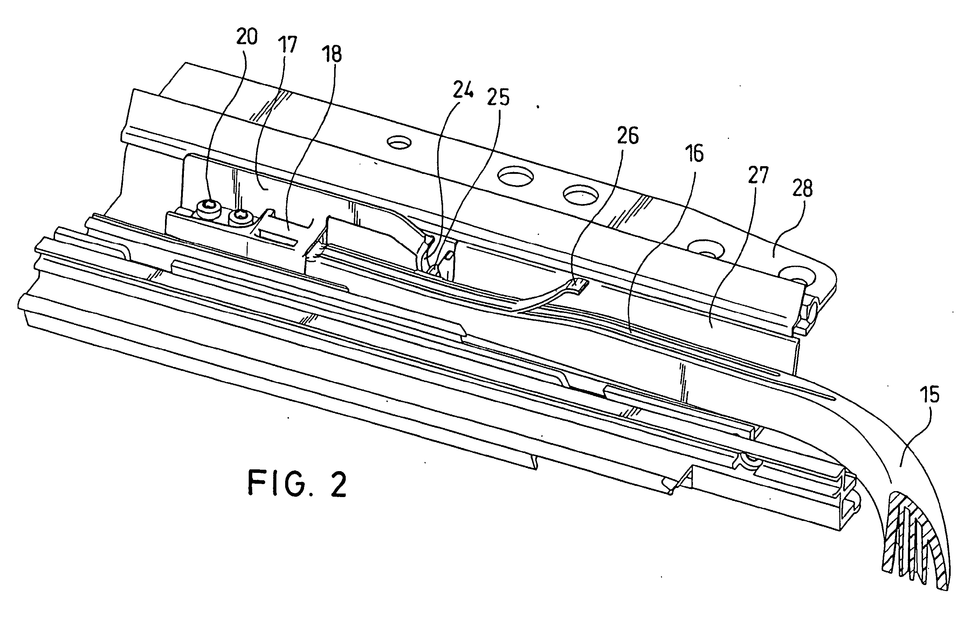

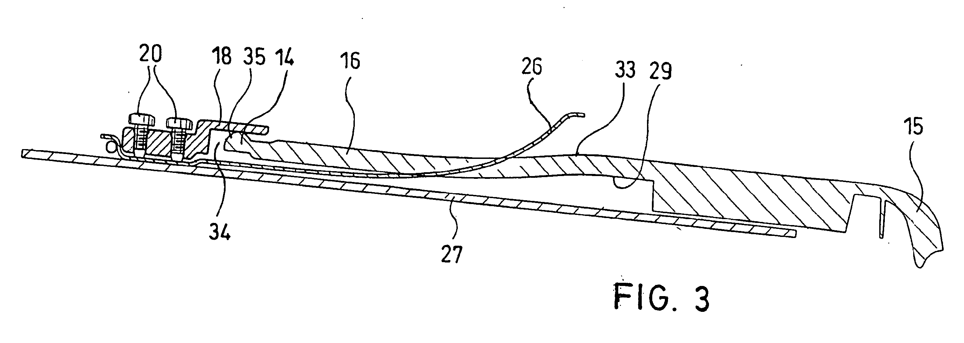

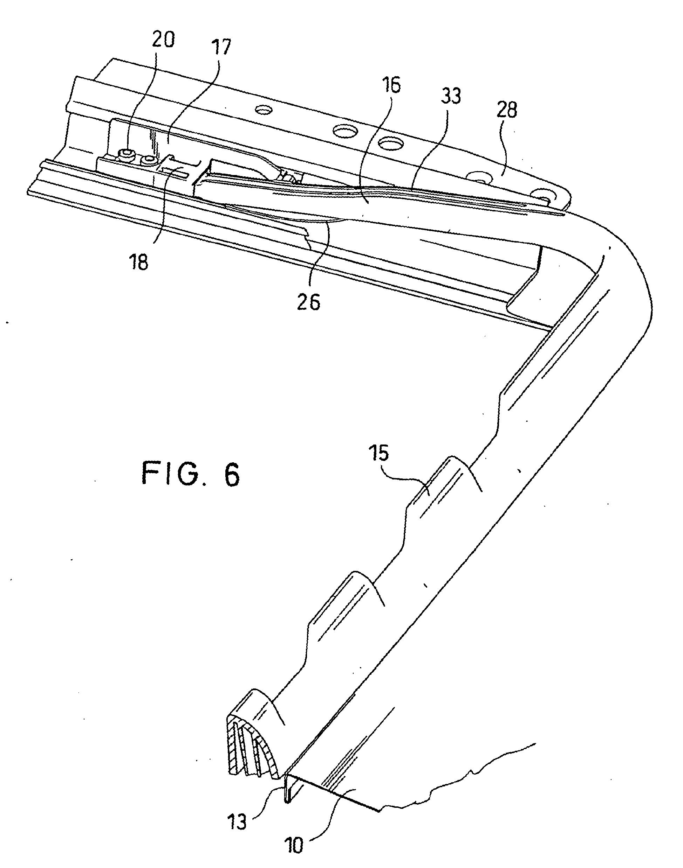

Zum Ausstellen des Windabweiser 15 dient eine als Blattfeder ausgebildete Feder 26, deren hinteres Ende durch die Schrauben 20 unter dem Lagerbock 18 gegen den Boden der Führungsschienen 27 fixiert wird. Das in den Fign. 2 und 3 in noch nicht montierten Zustand gezeigte andere Ende der Feder 26 legt sich in montierten Zustand (siehe Fig. 6) von unten her in einen Aufnahmeraum 29 (siehe Fig. 3) der Ausstellarme 16 ein und drückt die Ausstellarme dadurch federnd nach oben. Die Federn 26 zu beiden Seiten des Windabweisers 15 können gegenüber dem Lagerbock 18 um einen Betrag in Längsrichtung verschoben werden, wodurch sich durch die Verlagerung des Angriffspunkts und die damit verbundene Veränderung des Hebelarms die auf die Ausstellarme 16 wirkende Federkraft in einem bestimmten Bereich einstellen lässt. Zur Montage werden die freien Enden der Federn 26 einfach seitlich unter die Ausstellarme 16 in die Aufnahmeräumen 29 hineinbewegt.

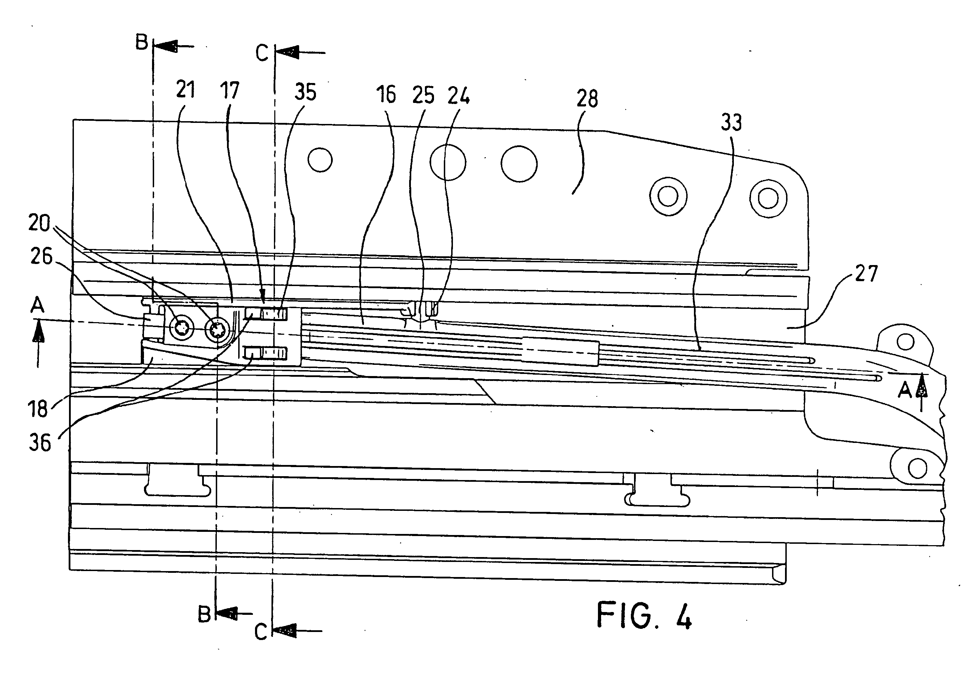

Wie in den Fign. 3 und 4 erkennbar, ist die Schwenkachse 14 am hinteren Ende der Ausstellarme 16 in Form von nach oben gewölbten Halbrund-Segmenten 35 ausgebildet. Sie werden von einem Aufnahmeraum 34 am Lagerbock 18 aufgenommen. Die obere Abdeckfläche des Lagerbocks 18 weist zwei parallele Schlitze 36 auf (siehe Fig. 4), in welche die Halbrund-Segmente 35 teilweise eintauchen und eine Schwenkbewegung bei einer Ausstellung des Windabweisers 15 ausführen können, in welchen sie jedoch auch etwas in Längsrichtung des Fahrzeugdaches 10 verlagerbar sind. Die eigentliche Schwenkbahn des Windabweisers 15 wird durch Kulissen 24 und in diese eingreifende Kulissenstifte 25 gesteuert. Die Kulissen 24 sind im nach vorne verlängerten vorderen Bereich eines vertikalen Steges 21 des Lagerbocks 18 ausgebildet. Wie am besten aus Fig. 2 zu erkennen, weisen diese Kulissen 24 bevorzugt eine leichte Bogenform mit einem in Fahrtrichtung hinten liegenden Scheitelpunkt auf. Die Kulissenstifte 25 sind an der Außenseite der Ausstellarme 16 angeformt oder befestigt.

An der Oberseite der Ausstellarme 16 sind Rampen 33 ausgebildet, auf welche die Vorderkante des Deckels 11 oder ein am Deckel 11 angeordnetes Teil beim Schließen aufläuft und dadurch den Windabweiser 15 gegen den Druck der Federn 26 in seine eingezogene Position unterhalb des festen Fahrzeugdach 10 nahe dem vorderen Rand 13 der Dachöffnung 12 bewegt. Beim Öffnen des Deckels 11 sorgen die Federn 26 für die Austellbewegung des Windabweiser 15.

Anstelle einer Befestigung an den Führungsschienen 27 kann auch einer Befestigung der Lagerböcke 18 an seitlichen Teilen oder einem vorderen Teil des Dachrahmens 28 erfolgen. Anstelle der beschriebenen, in vertikaler Richtung wirkenden Klemmverbindung kann auch eine horizontale Klemmverbindung zwischen zwei benachbarten Wandungen der Führungsschienen 27 bzw. des Dachrahmens 28 vorgesehen sein, die beispielsweise durch zwei mittels einer Schraube gegeneinander bewegbare Keilsegmente realisierbar ist.

Der im Hauptanspruch verwendete Begriff "gegenüberliegende Wände" an den Führungsschienen 27 oder dem Dachrahmen 28 ist nicht etwa beschränkend so zu verstehen, dass diese Wände einander unmittelbar zugewandt oder in einer vertikalen oder horizontalen Projektionen zumindest teilweise übereinander liegen müssten. Für den Fachmann ist klar, daß auch versetzt zueinander angeordnete Wände, die sogar unter einem Winkel zueinander stehen können, für eine Klemmverbindung im Sinne des Patentanspruchs benutzt werden können. Es ist auch möglich, eine Wand der Führungsschienen 27 und eine Wand des Dachrahmens 28 für die Klemmverbindung zu verwenden.

### Bezugszeichenliste

- 10: Fahrzeugdach
- 11: Deckel
- 12: Dachöffnung
- 13: vorderer Rand (von 12)
- 14: Schwenkachse (von 15)
- 15: Windabweiser
- 16: Ausstellarm
- 17: Lagerung
- 18: Lagerbock
- 19: Mittelteil (von 18)
- 20: Schraube
- 21: vertikaler Steg (an 18)
- 22: horizontaler Steg (an 18)
- 23: horizontaler Steg (an 18)
- 24: Kulisse
- 25: Kulissenstift
- 26: Feder
- 27: Führungsschiene
- 28: Dachrahmen
- 29: Aufnahmeraum (an 16)
- 30: horizontaler Steg (an 27)
- 31: horizontaler Steg (an 27)
- 32: Anlagefläche
- 33: Rampe
- 34: Aufnahmeraum (an 18)
- 35: Halbrund-Segment
- 36: Schlitz

## Patentansprüche

1. Windabweiser für ein Fahrzeugdach, der mit zwei seitlich angeordneten Ausstellarmen (16) verbunden ist, die ihrerseits über eine in Längsrichtung verstellbare Lagerung (17) mit einer Führungsschiene (27) oder einem Dachrahmen (28) verbunden sind, **dadurch gekennzeichnet, dass** die Lagerung (17) zur Befestigung an unterschiedlichen Einbauorten und für eine dort auszuführende leichte Justierbarkeit eine mittels einer lösbaren Befestigungsvorrichtung (20) betätigbare, längsverschiebbare Klemmverbindung zur kraftschlüssigen Abstützung an zwei gegenüberliegenden Wänden des Dachrahmens (28) oder der Führungsschiene (27) aufweist.

2. Windabweiser nach Anspruch 1, **dadurch gekennzeichnet, dass** die Klemmverbindung wenigstens eine einen horizontalen Steg (30, 31) des Dachrahmens (28) oder der Führungsschiene (27) untergreifende Anlagefläche (32) und ein die Anlagefläche (32) gegen den horizontalen Steg (30, 31) anpressendes Befestigungsorgan (20) aufweist.

3. Windabweiser nach Anspruch 2, **dadurch gekennzeichnet, dass** zu beiden Seiten der Lagerung (17) jeweils eine einen horizontalen Steg (30, 31) des Dachrahmens (28) oder der Führungsschiene (27) untergreifende Anlagefläche (32) vorgesehen ist

4. Windabweiser nach einem der Ansprüche 1 bis 3, **dadurch gekennzeichnet, dass** das Befestigungsorgan (20) als Abdrückschraube ausgebildet ist.

5. Windabweiser nach einem der Ansprüche 1 bis 4, **dadurch gekennzeichnet, dass** das Befestigungsorgan (20) gleichzeitig eine zur Betätigung des Windabweisers (15) benötigte Feder (26) am Dachrahmen (28) bzw. an der Führungsschiene (27) fixiert.

6. Windabweiser nach einem der Ansprüche 1 bis 5, **dadurch gekennzeichnet, dass** die Lagerung (17) zusätzlich eine Kulisse (24) aufweist, die im Zusammenwirken mit einem am Ausstellarm (16) angeordneten Kulissenstift (25) die Bewegungskurve des Windabweisers (15) beeinflusst.

7. Windabweiser nach einem der vorhergehenden Ansprüche, **dadurch gekennzeichnet, dass** die Lagerung (17) von einem Lagerbock (18) gebildet wird, der einen Aufnahmeraum (34) für die Schwenkachse (14) des Windabweisers (15) bildet, in welchem diese in Längsrichtung des Fahrzeugdaches (10) verlagerbar ist.

8. Windabweiser nach einem der Ansprüche 5 bis 7, **dadurch gekennzeichnet, dass** die Feder (26) als Blattfeder ausgebildet ist, deren eines Ende von den als Befestigungsorgane dienenden Schrauben (20) gegen den Boden der Führungschiene (27) oder des Dachrahmens (28) fixiert wird und deren anderes Ende in einen Aufnahmeraum (29) an der Unterseite des Ausstellarms (16) eingreift und dort den Ausstellarm (16) nach oben drückt.

9. Fahrzeugdach mit einem Windabweiser nach einem der vorhergehenden Ansprüche.

## Claims

1. Wind deflector for a vehicle roof, which is connected to two raising arms (16) which are arranged at the sides and which are in turn connected to a guide rail (27) or a roof frame (28) via a mounting (17) that can be adjusted in the longitudinal direction, **characterized in that,** to be fixed at different installation locations and for the ability to be adjusted easily there, the mounting (17) has a clamp connection which can be actuated by means of a detachable fixing device (20) and can be displaced longitudinally for the purpose of force-fitting support on two opposite walls of the roof frame (28) or the guide rail (27).

2. Wind deflector according to Claim 1, **characterized in that** the clamp connection has at least one contact face (32) engaging under a horizontal web (30, 31) of the roof frame (28) or the guide rail (27), and a fixing element (20) pressing the contact face (32) against the horizontal web (30, 31).

3. Wind deflector according to Claim 2, **characterized in that** a contact face (32) engaging under a horizontal web (30, 31) of the roof frame (28) or the guide rail (27) is provided on both sides of the mounting (17) in each case.

4. Wind deflector according to one of Claims 1 to 3, **characterized in that** the fixing element (20) is formed as a set screw.

5. Wind deflector according to one of Claims 1 to 4, **characterized in that** the fixing element (20) simultaneously fixes a spring (26) needed for the actuation of the wind deflector (15) to the roof frame (28) or to the guide rail (27).

6. Wind deflector according to one of Claims 1 to 5, **characterized in that** the mounting (17) additionally has a guide wing (24) which, in interaction with a guide pin (25) arranged on the raising arm (16), influences the movement curve of the wind deflector (15).

7. Wind deflector according to one of the preceding claims, **characterized in that** the mounting (17) is formed by a bearing block (18) which forms an accommodation space (34) for the pivot axis (14) of the wind deflector (15) and in which the said pivot axis (14) can be displaced in the longitudinal direction of the vehicle roof (10).

8. Wind deflector according to one of Claims 5 to 7, **characterized in that** the spring (26) is formed as a leaf spring, one end of which is fixed against the base of the guide rail (27) or that of the roof frame (28) by the screws (20) serving as fixing elements, and the other end of which engages in an accommodation space (29) on the underside of the raising arm (16) and there forces the raising arm (16) upwards.

9. Vehicle roof having a wind deflector according to one of the preceding claims.

## Revendications

1. Déflecteur pour un toit de véhicule, relié à deux bras de déploiement (16) occupant des positions latérales et reliés à leur tour, par l'intermédiaire d'une zone de montage (17) mobile dans le sens longitudinal, à une glissière de guidage (27) ou à un cadre de pavillon (28), **caractérisé par le fait que** ladite zone de montage (17) comporte, en vue de la fixation en différents emplacements d'intégration, et en vue d'une faculté d'ajustement aisé à effectuer auxdits emplacements, une solidarisation par coincement pouvant coulisser longitudinalement et pouvant être actionnée au moyen d'un dispositif (20) de fixation libérable, de manière à procurer un appui mécanique sur deux parois opposées du cadre de pavillon (28) ou de la glissière de guidage (27).

2. Déflecteur selon la revendication 1, **caractérisé par le fait que** la solidarisation par coincement comprend au moins une surface de contact (32) emprisonnant, par-dessous, une membrure horizontale (30, 31) du cadre de pavillon (28) ou de la glissière de guidage (27), et un organe de fixation (20) pressant ladite surface de contact (32) contre ladite membrure horizontale (30, 31).

3. Déflecteur selon la revendication 2, **caractérisé par le fait qu'**une surface respective de contact (32), emprisonnant par-dessous une membrure horizontale (30, 31) du cadre de pavillon (28) ou de la glissière de guidage (27), est prévue des deux côtés de la zone de montage (17).

4. Déflecteur selon l'une des revendications 1 à 3, **caractérisé par le fait que** l'organe de fixation (20) est réalisé sous la forme d'un boulon à chasser.

5. Déflecteur selon l'une des revendications 1 à 4, **caractérisé par le fait que** l'organe de fixation (20) assure simultanément la consignation respective à demeure, sur le cadre de pavillon (28) ou sur la glissière de guidage (27), d'un ressort (26) nécessaire à l'actionnement dudit déflecteur (15).

6. Déflecteur selon l'une des revendications 1 à 5, **caractérisé par le fait que** la zone de montage (17) présente, additionnellement, une coulisse (24) qui influence la courbe de mouvement dudit déflecteur (15) en coopérant avec un téton de coulissement (25) disposé sur le bras de déploiement (16).

7. Déflecteur selon l'une des revendications précédentes, **caractérisé par le fait que** la zone de montage (17) est matérialisée par un sabot de montage (18) qui forme un logement (34) dédié à l'axe de pivotement (14) dudit déflecteur (15), et dans lequel ledit axe peut être déplacé dans le sens longitudinal du toit (10) du véhicule.

8. Déflecteur selon l'une des revendications 5 à 7, **caractérisé par le fait que** le ressort (26) est réalisé sous la forme d'une lame de ressort dont l'une des extrémités est verrouillée, par les boulons (20) servant d'organes de fixation, contre le fond de la glissière de guidage (27) ou du cadre de pavillon (28) ; et dont l'autre extrémité s'engage dans un logement (29) situé à la face inférieure du bras de déploiement (16), et pousse ledit bras de déploiement (16) vers le haut dans ledit logement.

9. Toit de véhicule équipé d'un déflecteur selon l'une des revendications précédentes.
